# EUROPEAN PATENT APPLICATION

(11) **EP 4 307 829 A1**
(43) Date of publication of application: **17.01.2024**
(21) Application number: 23183556.2
(22) Date of filing: 05.07.2023
(51) Int. Cl.: H05B 1/02, A24F 40/00

(54) **HEATING CONTROL METHOD, DEVICE, AND CIRCUIT FOR ATOMIZATION DEVICE, MEDIUM, AND PROGRAM PRODUCT**

(30) Priority: 13.07.2022 CN 202210819219
(71) Applicant: Shenzhen Smoore Technology Limited, Shenzhen Guangdong 518102 (CN)
(72) Inventor: GE, Shaozhou, SHENZHEN, 518102 (CN); TAN, Hua, SHENZHEN, 518102 (CN); ZENG, Zhaohuan, SHENZHEN, 518102 (CN); CHEN, Tao, SHENZHEN, 518102 (CN)
(74) Representative: Corradini, Corrado

(57) **Abstract**

The present disclosure relates to a heating control method, device, circuit for an atomization device, an atomization device, a computer readable storage medium and a computer program product. The method includes obtaining a real-time detected temperature of a heating element of the atomization device in each detection period of a heating control process, and determining a heating state of the heating element based on a heating duration of a current heating period and the real-time detected temperature. The detection periods are shorter than the current heating period, and the heating durations of different heating periods are the same or different.

## Description

### TECHNICAL FIELD

This disclosure relates to the atomization device technology, and in particular, to a heating control method for an atomization, a heating control device for an atomization device, a heating control circuit for an atomization device, a medium and a program product.

### BACKGROUND

With the development of atomization devices, the number of users using the atomization devices is increasing. Generally, in order to meet the user's taste demand for the atomization device, the atomization of the atomization device can be performed by means of rapid heating during a first period and maintained by means of temperature maintenance during a next period.

However, the heating control of the atomization device in the above way will lead to low accuracy in the heating control of the atomization device and impairs the user's tasting experience.

### SUMMARY

In a first aspect, the present disclosure provides a heating control method for an atomization device. The method includes obtaining a real-time detected temperature of a heating element of the atomization device in each detection period of a heating control process, and determining a heating state of the heating element based on a heating duration of a current heating period and the real-time detected temperature. The detection periods are shorter than the current heating period, and the heating durations of different heating periods are the same or different.

In one of the embodiments, determining the heating state of the heating element based on the heating duration of the current heating period and the real-time detected temperature includes: controlling a heating process of the current heating period to end if the real-time detected temperature reaches a target temperature and the detection period corresponding to the real-time detected temperature is within the heating duration of the current heating period.

In one of the embodiments, determining the heating state of the heating element based on the heating duration of the current heating period and the real-time detected temperature included the following steps. Stopping heating after the heating duration of the current heating period ends if the real-time detected temperature during the heating duration does not reach a target temperature. Obtaining a real-time temperature of the heating element when the heating is stopped, the real-time temperature of the heating element being the real-time detected temperature in the detection period when the heating is stopped. Determining a heating duration of a next heating period of the heating element based on the real-time temperature of the heating element.

In one of the embodiments, determining the heating duration of the next heating period of the heating element based on the real-time temperature of the heating element includes calculating the heating duration of the next heating period of the heating element based on the real-time temperature of the heating element if the real-time temperature of the heating element is less than the target temperature.

In one of the embodiments, calculating the heating duration of the next heating period of the heating element based on the real-time temperature of the heating element includes: determining a heating energy for heating the heating element from the real-time temperature of the heating element to the target temperature, and determining the heating duration of the next heating period of the heating element based on the heating energy.

In one of the embodiments, determining the heating energy for heating the heating element from the real-time temperature of the heating element to the target temperature includes calculating the heating energy based on a difference between the target temperature and the real-time temperature of the heating element, a specific heat capacity of the material of the heating element, and a mass of the heating element.

In one of the embodiments, determining the heating duration of the next heating period of the heating element based on the heating energy includes: obtaining a voltage value and a current value of the heating element in a target detection period, the target detection period being a detection period corresponding to the real-time temperature of the heating element, determining a power of the heating element based on the voltage value and the current value, and determining the heating duration of the next heating period of the heating element based on the power of the heating element and the heating energy.

In one of the embodiments, the heating duration of the next heating period of the heating element is a ratio of the heating energy to the power.

In one of the embodiments, a heating duration of the first heating period of the heating control process is a preset heating duration.

In a second aspect, the present disclosure provides a heating control device for an atomization device. The heating control device includes an obtaining module and a state determination module. The obtaining module is configured to obtain a real-time detected temperature of a heating element of the atomization device in each detection period of a heating control process. The state determination module is configured to determine a heating state of the heating element based on a heating duration of a current heating period and the real-time detected temperature. The detection periods are shorter than the current heating period, and the heating durations of different heating periods are the same or different.

In one of the embodiments, the state determination module is further configured to control the heating process of the current heating period to end if the real-time detected temperature reaches a target temperature and the detection period corresponding to the real-time detected temperature is within the heating duration of the current heating period.

In one of the embodiments, the state determination module is further configured to stop heating after the heating duration of the current heating period ends if the real-time detected temperature within the heating duration does not reach the target temperature, and obtain a real-time temperature of the heating element when the heating is stopped. The real-time temperature of the heating element is the real-time detected temperature in the detection period when the heating is stopped. The state determination module is further configured to determine a heating duration of a next heating period of the heating element based on the real-time temperature of the heating element.

In one of the embodiments, the state determination module is further configured to calculate the heating duration of the next heating period of the heating element based on the real-time temperature of the heating element if the real-time temperature of the heating element is less than the target temperature.

In one of the embodiments, the state determination module is further configured to determine a heating energy for heating the heating element from the real-time temperature of the heating element to the target temperature, and determine the heating duration of the next heating period of the heating element based on the heating energy.

In one of the embodiments, the state determination module is further configured to calculate the heating energy based on a difference between the target temperature and the real-time temperature of the heating element, a specific heat capacity of the material of the heating element, and a mass of the heating element.

In one of the embodiments, the state determination module is further configured to obtain a voltage value and a current value of the heating element in a target detection period. The target detection period is the detection period corresponding to the real-time temperature of the heating element. The state determination module is further configured to determine a power of the heating element based on the voltage value and the current value, and determine the heating duration of the next heating period of the heating element based on the power and the heating energy.

In one of the embodiments, the heating duration of the next heating period is a ratio of the heating energy to the power.

In one of the embodiments, a heating duration of the first heating period of the heating control process is a preset heating duration.

In a third aspect, the present disclosure further provides a heating control circuit for an atomization device, including a control chip, a heating switch, and a temperature sensor that are connected to the control chip. The heating switch is connected to a heating element of the atomization device. The temperature sensor is configured to obtain a real-time detected temperature of the heating element in each detection period of a heating control process. The control chip being configured to determine a heating state of the heating element based on a heating duration of a current heating period and the real-time detected temperature, and control an on-off state of the heating switch based on the heating state of the heating element to control the heating state of the heating element. In one of the embodiments, the heating control circuit further includes a voltage and current sampling circuit connected between the control chip and the heating element. The voltage and current sampling circuit is configured to obtain a voltage value and a current value of the heating element in a target detection period. The target detection period is a detection period corresponding to the real-time temperature of the heating element less than a target temperature after the heating duration of the current heating period ends. The control chip is configured to determine a power of the heating element based on the voltage value and the current value, calculate a heating energy for heating the heating element from real-time temperature of the heating element to the target temperature based on a difference between the target temperature and the real-time temperature of the heating element, a specific heat capacity of the material of the heating element, and a mass of the heating element, and determine a heating duration of a next heating period of the heating element based on the power and the heating energy.

In a fourth aspect, the present disclosure further provides an atomization device. The atomization device includes at least one memory and at least one processor. A computer program is stored in the at least one memory. When the computer program is executed by the at least one processor, the following steps are performed: obtaining a real-time detected temperature of a heating element of the atomization device in each detection period of a heating control process, and determining a heating state of the heating element based on a heating duration of a current heating period and the real-time detected temperature. The detection periods are shorter than the current heating period, and the heating durations of different heating periods are the same or different.

In a fifth aspect, the present disclosure further provides a non-transitory computer readable storage medium, on which a computer program is stored. When the computer program is executed by at least one processor, the following steps are performed: obtaining a real-time detected temperature of a heating element of the atomization device in each detection period of a heating control process, and determining a heating state of the heating element based on a heating duration of a current heating period and the real-time detected temperature. The detection periods are shorter than the current heating period, and the heating durations of different heating periods are the same or different.

In a sixth aspect, the present disclosure further provides a computer program product, which includes a computer program. When the computer program is executed by at least one processor, the following steps are performed: obtaining a real-time detected temperature of a heating element of the atomization device in each detection period of a heating control process, and determining a heating state of the heating element based on a heating duration of a current heating period and the real-time detected temperature. The detection periods are shorter than the current heating period, and the heating durations of different heating periods are the same or different.

### BRIEF DESCRIPTION OF THE DRAWINGS

FIG. 1 is a schematic diagram showing a result of a heating control of an atomization device according to prior art.
FIG. 2 is a schematic diagram showing a result of a heating control method based on pulse width modulation (PWM).
FIG. 3 is a diagram showing an application environment for a heating control method for an atomization device according to an embodiment.
FIG. 4 is a schematic diagram of a flowchart of a heating control method for an atomization device according to an embodiment.
FIG. 5 is a schematic diagram of a flowchart for determining a heating state of a heating element based on a heating duration of a current heating period and a real-time detected temperature according to an embodiment.
FIG. 6 is a schematic diagram of a flowchart for determining a heating duration of the next heating period of a heating element based on a heating energy according to an embodiment.
FIG. 7 is a schematic diagram of a curve of a heating state of a heating element according to an application example.
FIG. 8 is a schematic diagram of a curve of a heating state of a heating element according to an application example.
FIG. 9 is a schematic diagram of a curve of a heating control process for an atomization device according to an application example.
FIG. 10 is a schematic diagram of a flowchart of a heating control method for an atomization device according to an embodiment.
FIG. 11 is a schematic diagram of a structure of a heating control circuit for an atomization device according to an embodiment.
FIG. 12 is a block diagram of a structure of a heating control device for an atomization device according to an embodiment.

### DETAILED DESCRIPTION OF THE EMBODIMENTS

In order to make the purpose, technical solutions and advantages of the present disclosure more clear, the present disclosure will be further described in detail below with reference to the accompanying drawings and embodiments. It should be understood that the specific embodiments described herein are only used to explain the present disclosure, but not to limit the present disclosure.

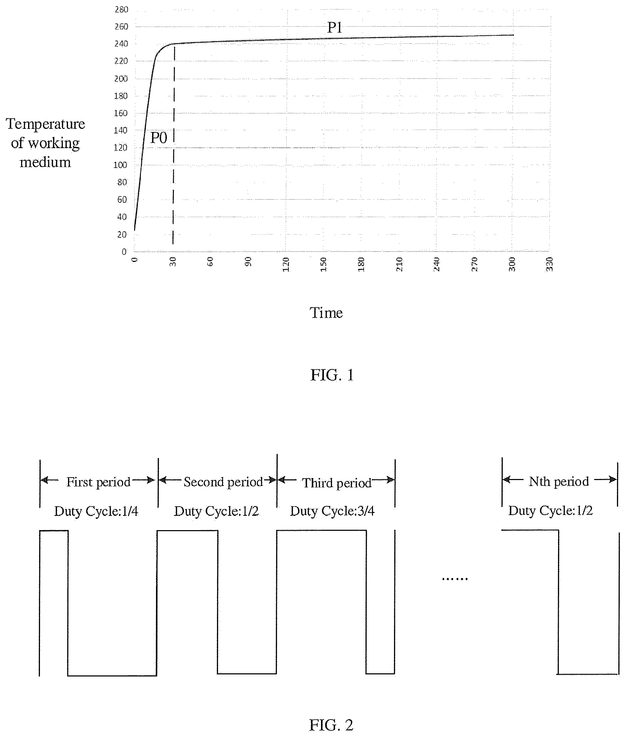

Generally, as shown in FIG. 1, a schematic diagram of a result of a heating control of an atomization device is provided. In a heating control process of the atomization device, in order to meet the user's taste demand, rapid heating may be used in the P0 process to make a temperature of a working medium quickly rise to the temperature set for the P1 process, and the temperature is maintained relatively stable after the P1 process.

However, the accuracy of the heating control of the atomization device is low when the aforementioned heating control method is used to heat the atomization device because the working medium of the atomization device has a characteristic of slow heat conduction. After a high-power heating of the heating element arranged in the working medium of the atomization device, the energy accumulated in the heating element after the high-power heating is not conducted to the working medium. The energy accumulated in the heating element causes the temperature of the working medium to exceed the preset temperature of the P1 process after the heating element stops heating. In another case where the heating element stops heating in advance, the energy of the heating element cannot reach the preset temperature required for the P1 process, which impairs the user's tasting experience.

In response to the above situation, a heating control method based on pulse width modulation (PWM) can be employed to achieve the heating control process of the atomization device. The heating control method based on PWM has a fixed frequency and a variable duty cycle. As shown in FIG. 2, there are N heating periods for the heating element, starting with the first period and continuing until the Nth period. In the whole heating control process, the durations of the heating periods of the heating element are the same, i.e., a total time of a switching-on time *Ton* and a switching-off time *Toff* of the heating element is unchanged. Different duty cycles at different heating periods can be achieved by adjusting the switching-on time *Ton* to control the output. The fixed frequency f is a ratio of one to a first parameter, and the first parameter is a sum of the *Ton* and *Toff.* The duty cycle *D* is a ratio of the *Ton* to a second parameter, and the second parameter is a sum of the *Ton* and *Toff.*

In order to accurately control the working medium, the control method based on PWM has high requirements for a heat transfer rate of the working medium, a temperature measurement speed of a sensor, a temperature measurement accuracy of a sensor, and a high precision of the selected temperature sensor. In addition, part of the temperature sensors needs to be calibrated by additional equipment before use, which will increase the investment in equipment, production processes and production time, increasing the total cost.

Moreover, even though the heating control method based on PWM can control the output by adjusting the *Ton,* in the actual application scenarios, setting each of the heating periods of the heating element to the same duration may lead to a low accuracy of the heating control of the atomization device.

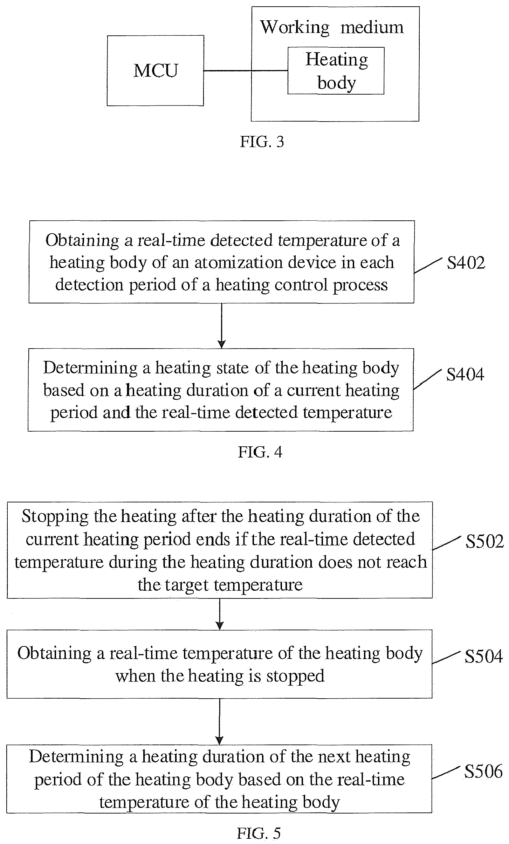

In view of this, the present disclosure provides a heating control method for an atomization device. The heating control method for the atomization device can be applied in an application environment as shown in FIG. 3. The application environment includes a micro controller unit (MCU) and a heating element arranged in a working medium. The micro controller unit can be referred to as a control chip. The control chip obtains a real-time detected temperature of the heating element of the atomization device in each detection period of a heating control process, and then determines a heating state of the heating element based on a heating duration of a current heating period and the real-time detected temperature.

In an embodiment, as shown in FIG. 4, a heating control method for an atomization device is provided. Taking the method performed by the MCU as shown in FIG. 1 as an example, the method may include the following steps.

At step S402, a real-time detected temperature of a heating element of an atomization device in each detection period of a heating control process is obtained.

In this embodiment, the atomization device includes the heating element arranged in the working medium. The working medium may be referred to as a heated substance or an aerosol generating substrate. The form of the aerosol generating substrate may be liquid, gel, paste, or solid, etc., which can be set according to the actual application scenarios. For example, the aerosol generating substrate may be a solid in the form of crushed, granular, powder, strip, or sheet, etc., if the aerosol generating substrate is the solid.

Furthermore, by obtaining the real-time detected temperature of the heating element of the atomization device in each detection period during the heating control process, the temperature of the heating element in the heating control process can be determined in real time. Since the energy generated by the temperature of the heating element affects the temperature of the working medium, the temperature of the working medium can be determined in real time by determining the temperature of the heating element in real time, and therefore the atomization process of the atomization device can be determined based on the temperature of the working medium, which improves the user's tasting experience.

The detection period may be 1ms or other values. The specific value of the detection period can be determined according to actual application scenario and is not limited in this embodiment.

At step S404, a heating state of the heating element is determined based on a heating duration of a current heating period and the real-time detected temperature.

In this embodiment, the real-time detected temperature of the heating element in each detection period can be obtained in real time based on the detection period, so that when the heating state of the heating element is determined based on the heating duration of the current heating period and the real-time detected temperature, an accurately heating control of the atomization device can be achieved, thus improving the user's tasting experience.

It should be noted that the heating duration of the first heating period of the heating control process of the atomization device is a preset heating duration. In the first heating period, the heating element may be heated for the preset heating duration before proceeding to the next heating period. Alternatively, in the first heating period, the heating element may be heated for the preset heating duration, stop heating for a preset stopping duration, and then go to the next heating period. The above cases are non-limiting in the embodiment.

Overall, in the embodiment shown in FIG. 4, the real-time detected temperature of the heating element of the atomization device in each detection period of the heating control process can be obtained by setting the detection period. When determining the heating state of the heating element based on the heating duration of the current heating period and the real-time detected temperature, the determination accuracy of the heating state of the heating element is improved by considering the impact of the heating duration of the current heating period on the heating state of the heating element. The high accuracy in determining the heating state of the heating element improves the heating control accuracy of the atomization device and the user's tasting experience.

In one of the embodiments, determining the heating state of the heating element based on the heating duration of the current heating period and the real-time detected temperature includes: controlling the heating process of the current heating period to end if the real-time detected temperature reaches a target temperature and the detection period corresponding to the real-time detected temperature is within the heating duration of the current heating period.

The target temperature may be set to 200°C or any other values. The specific value of the target temperature can be set based on the actual application scenarios and is not limited in this embodiment.

It should be noted that the real-time detected temperature of the heating element is allowed to rise to an upper limit of the target temperature, but is not allowed to exceed the upper limit of the target temperature. For example, the target temperature is 200°C, and the upper limit of the target temperature is 230 °C . Damage to the heating element can be avoided to some extent by setting the upper limit of the target temperature of the heating element.

In one of the embodiments, as shown in FIG. 5, a schematic diagram of a flowchart for determining the heating state of the heating element based on the heating duration of the current heating period and the real-time detected temperature is provided. Taking the method performed by the MCU in FIG. 1 as an example, the method includes the following steps.

At step S502, the heating is stopped after the heating duration of the current heating period ends if the real-time detected temperature during the heating duration does not reach the target temperature.

In this embodiment, the detection periods are shorter than the current heating duration, and therefore the real-time detected temperature of the heating element in each detection period within the heating duration can be detected in accordance with the detection periods. If the real-time detected temperature detected in each detection period within the heating duration of the current heating period does not reach the target temperature, the heating can be stopped after the heating duration of the current heating period ends, so that the temperature of the heating element can reach the target temperature after the heating is stopped.

At step S504, a real-time temperature of the heating element when the heating is stopped is obtained.

In this embodiment, the real-time temperature of the heating element is the real-time detected temperature in the detection period when the heating is stopped. The real-time temperature detected in the last detection period within the heating duration is taken as the real-time temperature of the heating element. Alternatively, the real-time temperature detected at the end of the heating duration is taken as the real-time temperature of the heating element, neither is limiting in this embodiment.

At step S506, a heating duration of the next heating period of the heating element is determined based on the real-time temperature of the heating element.

In this embodiment, the heating duration of the next heating period of the heating element can be calculated based on the real-time temperature of the heating element if the real-time temperature of the heating element is less than the target temperature. In an embodiment, calculating the heating duration of the next heating period of the heating element based on the real-time temperature of the heating element includes the following steps.

At step S5062, a heating energy for heating the heating element from the real-time temperature of the heating element to the target temperature is determined.

At step S5064: the heating duration of the next heating period of the heating element is determined based on the heating energy.

In S5062, the heating energy can be obtained based on a difference between the target temperature and the real-time temperature of the heating element, a specific heat capacity of the material of the heating element, and a mass of the heating element. For example, the heating energy is represented by Q, the target temperature is represented by T1, the real-time temperature of the heating element is represented by T0, the specific heat capacity of the material of the heating element is represented by C, and the mass of the heating element is represented by m. Then, Q can be calculated according to the following formula: Q=C × m × (T1-T0). In this formula, the unit of the specific heat capacity of the material of the heating element is J/(KG. °C).

In a specific example, if C×m is 1.5, the target temperature is 125°C, and the real-time temperature of the heating element is 100°C, then Q is equal to 37.5, obtained by Q =1.5×(125°C-100°C). As described above, in the embodiment shown in FIG. 5, the heating energy required to raise the real-time temperature of the heating element to the target temperature can be determined by obtaining the real-time detected temperature of the detection period when the heating is stopped in the current heating period and comparing the real-time detected temperature with the target temperature. Thus, the heating duration of the next heating period of the heating element can be determined based on the heating energy, so that the heating control process of the atomization device can be precisely controlled without exceeding the target temperature.

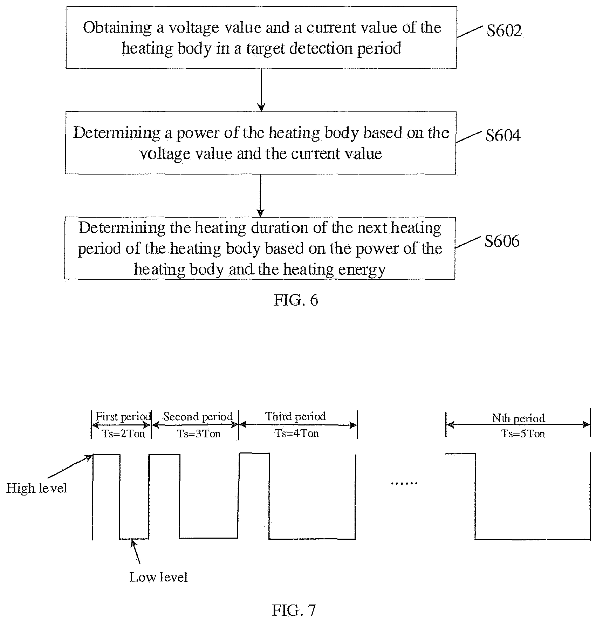

In one of the embodiments, as shown in FIG. 6, a schematic diagram of a flowchart for determining the heating duration of the next heating period of the heating element based on the heating energy is provided. The method shown in FIG. 6 is a further limitation of the step S5064. Taking the method performed by the MCU shown in FIG. 1 as an example, the method includes the following steps.

At step S602, a voltage value and a current value of the heating element in a target detection period are obtained.

In this embodiment, the target detection period is the detection period corresponding to the real-time temperature of the heating element. A step S604 can be performed after obtaining the voltage value and the current value of the heating element in the target detection period.

At step S604, a power of the heating element is determined based on the voltage value and the current value.

In this embodiment, the power of the heating element is a product of the voltage value and the current value. For example, the power of the heating element is represented by P, the voltage value is represented by U, and the current value is represented by I. Then P can be calculated according to the following formula: P=U×I.

At step S606, the heating duration of the next heating period of the heating element is determined based on the power of the heating element and the heating energy.

In an embodiment, the heating duration of the next heating period of the heating element is a ratio of the heating energy to the power of the heating element. For example, the heating duration is represented by *Dh.* In this embodiment, the heating duration *Dh* is equal to the switching-on time *Ton* of the heating element. The heating energy is represented by Q, and the power of the heating element is represented by P. Then the heating duration *Dh* can be calculated according to the following formula: *Dh*=Q/P. For example, if P is equal to 25.92W, and Q is equal to 37.5J, then the heating duration is equal to 1.447s, obtained by *Dh*=37.5J/25.92W.

As described above, in the embodiment shown in FIG. 6, by obtaining the voltage value and the current value of the heating element in the target detection period, the power of the heating element can be determined based on the voltage value and the current value. Thus, the heating duration of the next heating period of the heating element can be determined based on the power and the heating energy. In this way, the heating element can be raised to the target temperature from the real-time temperature of the heating element in the next heating period by determining the heating duration of the next heating period of the heating element. Furthermore, the atomization process of the working medium can constantly be maintained by controlling the temperature of the heating element to reach the target temperature in real time, thus improving the user's tasting experience. It can be understood that in FIG. 6, the MCU determines the power of the heating element based on the voltage value and the current value. The MCU may also determine the power of the heating element based on the voltage value of the heating element and a resistance value of the heating element. Specifically, the power of the heating element is represented by P, the voltage value of the heating element is represented by U, and the resistance value of the heating element is represented by R. Then P can be calculated according to the following formular: P=(U×U)/R. For example, if U is equal to 3.6V, and R is equal to 0.5Ω, then P is equal to 25.29W, obtained by Q = (3.6 × 3.6)/0.5.

Based on the contents shown in FIGS. 4 to 6, it can be understood that, according to the formula Q=C×m×(T1-T0), the heating energies required for heating the heating element from the real-time detected temperature of the heating element to the target temperature T1 are different depending on different real-time detected temperatures T0 of the heating element in different detection periods. Furthermore, the heating durations *Dh* of the next heating period of the heating element are also different according to the formula *Dh*=Q/P, i.e., the heating states of the heating element are different in different heating periods.

Exemplarily, a curve of the heating state of the heating element in an application example is shown in FIG. 7. The heating duration of the heating element in each heating period is represented by a high level, and the stopping heating duration of the heating element in each heating period is represented by a low level. It can be seen from FIG. 7 that the durations of the heating periods Ts of the heating element are different, and the heating durations and the stopping heating durations of the heating element are also different in different heating periods.

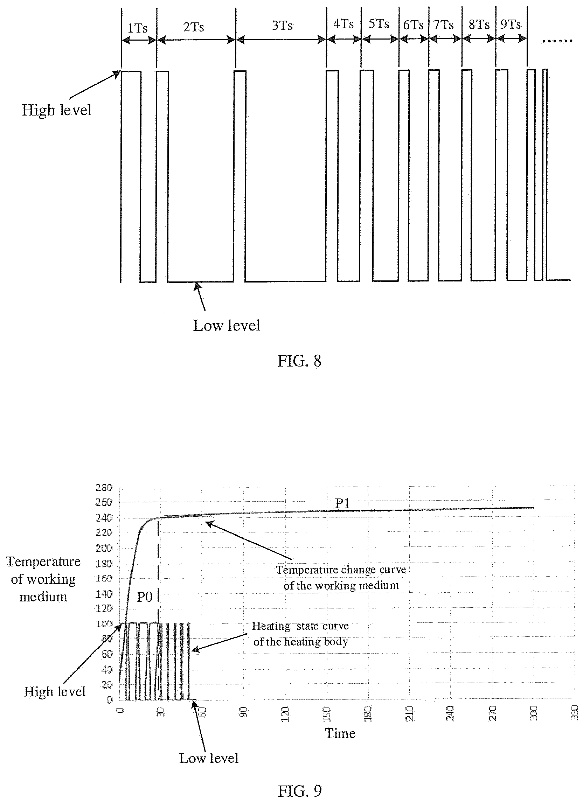

Exemplarily, a curve of the heating state of the heating element in an application example is shown in FIG. 8. The heating duration of the heating element in each heating period is represented by a high level, and the stopping heating duration of the heating element in each heating period is represented by a low level. It can be seen that, in different heating periods Ts, the heating durations of the heating element are different and the stopping heating durations of the heating element are also different.

Exemplarily, a heating control curve of the atomization device in an application example is shown in FIG. 9. The heating duration of the heating element in each heating period is represented by a high level, and the stopping heating duration of the heating element in each heating period is represented by a low level. The heating duration of the heating element in each heating period includes the heating duration and the stopping heating duration.

In the heating state curve of the heating element, the heating duration of the heating element is greater than the stopping heating duration in the process P0, and the heating duration of the heating element is less than the stopping heating duration in the process P1. Correspondingly, in the temperature change curve of the working medium, the temperature of the working medium increases fast in the P0 process, and the temperature of the working medium is kept stable in the P1 process. The temperature of the working medium can be controlled by controlling the heating state of the heating element, thus the accuracy of the heating control for the atomization device can be improved.

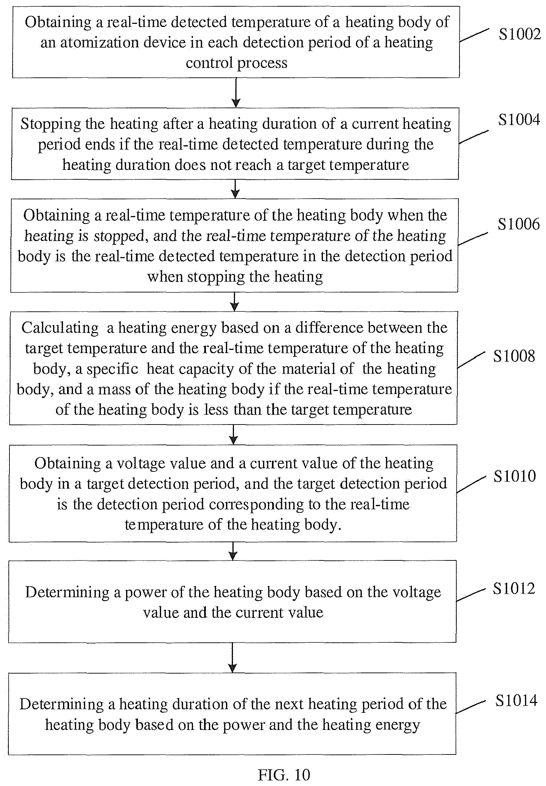

Based on the contents shown in FIGS. 3 to 9, exemplarily, FIG. 10 shows a schematic diagram of a flowchart of a heating control method for an atomization device. The method may include the following steps.

At step S1002, a real-time detected temperature of a heating element of an atomization device in each detection period of a heating control process is obtained.

At step S 1004, the heating is stopped after a heating duration of a current heating period ends if the real-time detected temperature during the heating duration does not reach a target temperature. At step S1006, a real-time temperature of the heating element when the heating is stopped is obtained, and the real-time temperature of the heating element is the real-time detected temperature in the detection period when the heating is stopped.

In this embodiment, the real-time temperature detected in the last detection period within the heating duration is taken as the real-time temperature of the heating element. The real-time temperature detected at the end of the heating duration may also be taken as the real-time temperature of the heating element.

At step S 1008, a heating energy is calculated based on a difference between the target temperature and the real-time temperature of the heating element, a specific heat capacity of the material of the heating element, and a mass of the heating element if the real-time temperature of the heating element is less than the target temperature.

At step S 1010, a voltage value and a current value of the heating element in a target detection period are obtained, and the target detection period is the detection period corresponding to the real-time temperature of the heating element.

At step S 1012, a power of the heating element is determined based on the voltage value and the current value.

At step S 1014, a heating duration of the next heating period of the heating element is determined based on the power and the heating energy.

In this embodiment, the details of the steps S 1002-S 1014 can be referred to the previous corresponding description and will not be repeated here.

It should be noted that after obtaining the real-time detected temperature of the heating element of the atomization device in each detection period of the heating control process, the heating process of the current heating period is controlled to end if the real-time detected temperature reaches the target temperature and the detection period corresponding to the real-time detected temperature is within the heating duration of the current heating period, so as to avoid the temperature of the heating element exceeding the target temperature.

It indicates that the output energy Q corresponding to the real-time detected temperature of the heating element is excessive if the real-time detected temperature reaches the target temperature and the detection period corresponding to the real-time detected temperature is within the heating duration of the current heating period. Therefore, the heating process of the current heating period is ended by controlling a heating switch so that the working medium temperature will not exceed a preset target temperature of the working medium based on the output energy, thus improving the user's tasting experience while achieving the accurate heating control of the atomization device. It should be understood that, although the steps in the flowcharts involved in the above embodiments are sequentially shown by the indications of the arrows, these steps are not necessarily executed in the order indicated by the arrows. Unless explicitly stated herein, the execution of these steps is not strictly limited to the order, and the steps may be executed in other orders. Moreover, at least a part of the steps in the flowcharts involved in the above embodiments may include multiple steps or multiple stages, and these steps or stages are not necessarily executed and completed at the same time, but may be performed at different times. The execution order of these steps or stages is not necessarily sequential, but may be performed alternately or in turn with other steps or at least a part of the steps or stages of the other steps.

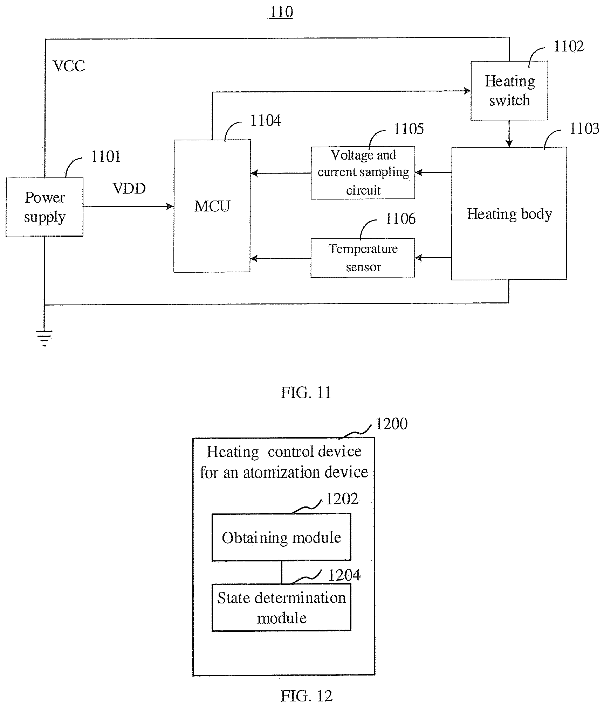

In an embodiment of the present disclosure, a heating control circuit 110 for an atomization device is also provided. As shown in FIG. 11, one end of a power supply 1101 is grounded, and the other end of the power supply 1101 is connected to a heating switch 1102. The heating switch 1102 is connected to one end of a heating element 1103, and the other end of the heating element 1103 is grounded. The other end of the power supply 1101 is further connected to an MCU 1104. The MCU 1104 can be referred to as a control chip. A voltage and current sampling circuit 1105 is provided between the MCU 1104 and the heating switch 1102.

The power supply 1101 can provide a supply voltage VCC to the heating switch such that the heating switch 1102 can perform an on state and an off state instructed by the MCU 1104 based on the supply voltage VCC. The power supply 1101 can provide an operating voltage VDD to the MCU 1104 such that the MCU 1104 can be used to perform the steps of the heating control method for the atomization device based on the operating voltage VDD.

Specifically, a temperature sensor 1106 is configured to obtain a real-time detected temperature of the heating element in each detection period of a heating control process. The control chip is configured to determine a heating state of the heating element based on a heating duration of a current heating period and the real-time detected temperature, and control an on-off state of the heating switch based on the heating state of the heating element to control the heating state of the heating element.

In one of the embodiments, the control chip is further configured to control the heating to enter the off state to end the heating process of a current heating period if the real-time detected temperature reaches a target temperature and the detection period corresponding to the real-time detected temperature is within the heating duration of the current heating period.

In one of the embodiments, the control chip is further configured to control the heating to enter the off state to control the heating element to stop heating after the heating duration of the current heating period ends if the real-time detected temperature within the heating duration does not reach the target temperature. The temperature sensor is further configured to obtain the real-time temperature of the heating element when the heating is stopped. The real-time temperature of the heating element is the real-time detected temperature in the detection period when the heating is stopped. The control chip is further configured to determine a heating duration of a next heating period of the heating element based on the real-time temperature of the heating element.

In one of the embodiments, the control chip is further configured to calculate the heating duration of the next heating period of the heating element based on the real-time temperature of the heating element if the real-time temperature of the heating element is less than the target temperature.

In one of the embodiments, the control chip is further configured to determine a heating energy for heating the heating element from the real-time temperature of the heating element to the target temperature, and determine the heating duration of the next heating period of the heating element based on the heating energy.

In one of the embodiments, the control chip is further configured to calculate the heating energy based on a difference between the target temperature and the real-time temperature of the heating element, a specific heat capacity of the material of the heating element, and a mass of the heating element.

In one of the embodiments, the voltage and current sampling circuit is configured to obtain a voltage value and a current value of the heating element in a target detection period. The target detection period is the detection period corresponding to the real-time temperature of the heating element. The control chip is further configured to determine a power of the heating element based on the voltage value and the current value, and determine the heating duration of the next heating period of the heating element based on the power and the heating energy.

In one of the embodiments, the control chip is further configured to set a ratio of the heating energy to the power as the heating duration of the next heating period.

In one of the embodiments, the control chip is further configured to set the heating duration of the first heating period of the heating control process as a preset heating duration.

With reference to the above contents, it could be understood that the greater the temperature difference between the real-time temperature of the heating element and the target temperature, the more heating energy the heating element needs to release, which will result in a longer switching-on time *Ton* for the heating switch controlled by the MCU and a higher switching-on rate. The smaller the temperature difference between the real-time temperature of the heating element and the target temperature, the less heating energy the heating element needs to release, which will result in a longer witching-off time *Toff* for the heating switch controlled by the MCU and a lower switching-on rate. Therefore, a balanced temperature control can be achieved.

With reference to the above contents, it should be noted that the heating control method for the atomization device proposed in the present disclosure is a heating control method based on pulse frequency modulation (PFM). Compared with the heating control method based on PWM, the heating control method based on PFM does not require precise temperature control for the heating element because, in some application scenarios, there is a certain adaptation temperature difference between an upper limit of the temperature of the heating element and the target temperature of the heating element, which is more beneficial to the conduction of the heating element's output energy and enhances the heating rate. As the heating element does not require precise temperature control, the processing performed by the MCU will also be reduced accordingly, which can reduce the workload of the MCU and increase operational processing effectiveness.

In addition, the heating control method based on PFM does not require a high-precision temperature sensor. Even if the obtained heating temperature is inaccurate, the heating rate of the heating element can be controlled by continuously detecting the temperature of the heating element through the detection periods, which, at most, increases the heating periods of the heating element. Compared with the heating control method based on PWM which requires a high-precision temperature sensor, the heating control method based on PFM can reduce the cost by saving on calibration equipment and tedious calibration processes.

In the above description, the heating control method for the atomization device is based on the temperature of the heating element. The heating control of the atomization device can also be achieved by determining the temperature of the working medium, since the temperature of the working medium is influenced by the temperature of the heating element. For example, the highest temperature of the working medium in the heating period and the last temperature of the working medium before the heating period ends are obtained, based on which a trend of the temperature change can be determined and, consequently, whether the *Ton* and *Toff* should be adjusted in the following heating period can be determined based on the trend of the temperature change. Alternatively, a magnitude of a temperature difference between the last temperature of the working medium in the heating period and the target temperature is determined. If the temperature difference is large, both the *Ton* and *Toff* can be adjusted simultaneously. If the temperature difference is small, one of the *Ton* or *Toff* can be adjusted.

In a possible case, to control heating in situations where there is a large temperature difference, such as when a heating element at a room temperature (25 °C) needs to rapidly reach a target temperature (150°C) of the working medium, the heating energy of the working medium from the room temperature to the target temperature of the working medium can be calculated with reference to the way of calculating the power of the heating element. The heating energy may be very large, thus a long switching-on time *Ton* may be set. For example, the switching-on time *Ton* is greater than five seconds. With the long switching-on time, the heating element can heat in accordance with the switching-on time *Ton,* so that the energy output by the heating element can raise the temperature of the working medium until the temperature of the working medium reaches the target temperature of the working medium.

Based on the same concept, embodiments of the present disclosure further provide a heating control device for an atomization to implement the aforementioned heating control method for the atomization device. The solution to the problem provided by the device is similar to the solution in the method described above, such that the specific features in one or more embodiments of the atomization device heating control device provided below can be referred to the aforementioned features for the heating control method for the atomization device and will not be repeated here. In an embodiment, as shown in FIG. 12, a block diagram of a structure of a heating control device for an atomization device is provided. The heating control device 1200 includes an obtaining module 1202 and a state determination module 1204. The obtaining module 1202 is configured to obtain a real-time detected temperature of a heating element of the atomization device in each detection period of a heating control process. The state determination module 1204 is configured to determine a heating state of the heating element based on a heating duration of a current heating period and the real-time detected temperature. The detection periods are shorter than the current heating period, and the heating durations of different heating periods are the same or different.

In one of the embodiments, the state determination module 1204 is further configured to control the heating process of the current heating period to end if the real-time detected temperature reaches a target temperature and the detection period corresponding to the real-time detected temperature is within the heating duration of the current heating period.

In one of the embodiments, the state determination module 1204 is further configured to stop heating after the heating duration of the current heating period ends if the real-time detected temperature within the heating duration does not reach the target temperature, and obtain a real-time temperature of the heating element when the heating is stopped. The real-time temperature of the heating element is the real-time detected temperature in the detection period when the heating is stopped. The state determination module is further configured to determine a heating duration of a next heating period of the heating element based on the real-time temperature of the heating element.

In one of the embodiments, the state determination module 1204 is further configured to calculate the heating duration of the next heating period of the heating element based on the real-time temperature of the heating element if the real-time temperature of the heating element is less than the target temperature.

In one of the embodiments, the state determination module 1204 is further configured to determine a heating energy for heating the heating element from the real-time temperature of the heating element to the target temperature, and determine the heating duration of the next heating period of the heating element based on the heating energy.

In one of the embodiments, the state determination module 1204 is further configured to calculate the heating energy based on a difference between the target temperature and the real-time temperature of the heating element, a specific heat capacity of the material of the heating element, and a mass of the heating element.

In one of the embodiments, the state determination module 1204 is further configured to obtain a voltage value and a current value of the heating element in a target detection period. The target detection period is the detection period corresponding to the real-time temperature of the heating element. The state determination module is further configured to determine a power of the heating element based on the voltage value and the current value, and determine the heating duration of the next heating period of the heating element based on the power and the heating energy.

In one of the embodiments, the heating duration of the next heating period is a ratio of the heating energy to the power.

In one of the embodiments, a heating duration of the first heating period of the heating control process is a preset heating duration.

The modules of the above heating control device for the atomization device may be implemented in whole or in part by software, hardware, and combinations thereof. Each of the above modules may be embedded in or independent of a processor in a computer device in a form of hardware, or may be stored in a memory of the computer device in a form of software, so as to be called by the processor to perform the operations corresponding to the above modules.

In an embodiment, an atomization device (not shown in the drawings) is provided. The atomization device includes at least one memory and at least one processor. At least one computer program is stored in the at least one memory. When the at least one computer program is executed by the at least one processor, the steps of the above method embodiments are implemented.

In an embodiment, a non-transitory computer readable storage medium (not shown in the drawings) is further provided. A computer program is stored in the computer readable storage medium. When the computer program is executed by at least one processor, the steps of the above method embodiments are implemented.

In an embodiment, a computer program product (not shown in the drawings) is further provided. The computer program product includes a computer program. When the computer program is executed by at least one processor, the steps of the methods in the above embodiments are implemented.

Those of ordinary skill in the art can understand that all or part of the processes of the methods of the above embodiments may be implemented by instructing relevant hardware through a computer program. The computer program may be stored in a non-transitory computer-readable storage medium. When the computer program is executed, the processes of the above-mentioned method embodiments can be implemented. Any reference to a memory, a database or other medium used in the embodiments provided in the present disclosure may include at least one of a non-transitory memory and a transitory memory. The non-transitory memory may include a Read-Only Memory (ROM), a magnetic tape, a floppy disk, a flash memory, an optical memory, a high-density embedded non-volatile memory, a resistive memory (ReRAM), a Magnetoresistive Random Access Memory (MRAM), a Ferroelectric Random Access Memory (FRAM), a Phase Change Memory (PCM), or a graphene memory, etc. The transitory memory may include a Random Access Memory (RAM), an external cache memory, or the like. By way of illustration and not limitation, the RAM may be in various forms, such as a Static Random Access Memory (SRAM), or a Dynamic Random Access Memory (DRAM), etc. The database involved in the embodiments provided in the present disclosure may include at least one of a relational database or a non-relational database. The non-relational database may include a blockchain-based distributed database, etc., but is not limited thereto. The processors involved in the embodiments provided in present disclosure may be general-purpose processors, central processing units, graphics processors, digital signal processors, programmable logic devices, data processing logic devices based on quantum computing, etc., and is not limited to this.

## Claims

1. A heating control method for an atomization device, comprising:
obtaining a real-time detected temperature of a heating element of the atomization device in each detection period of a heating control process (S402), and
determining a heating state of the heating element based on a heating duration of a current heating period and the real-time detected temperature (S404),
wherein the detection periods are shorter than the current heating period, and the heating durations of different heating periods are the same or different.

2. The method according to claim 1, wherein the determining the heating state of the heating element based on the heating duration of the current heating period and the real-time detected temperature comprises:
controlling a heating process of the current heating period to end if the real-time detected temperature reaches a target temperature and the detection period corresponding to the real-time detected temperature is within the heating duration of the current heating period.

3. The method according to claim 1, wherein the determining the heating state of the heating element based on the heating duration of the current heating period and the real-time detected temperature comprises:
stopping heating after the heating duration of the current heating period ends if the real-time detected temperature during the heating duration does not reach a target temperature (S502),
obtaining a real-time temperature of the heating element when the heating is stopping (S504), the real-time temperature of the heating element being the real-time detected temperature in the detection period when the heating is stopped, and
determining a heating duration of a next heating period of the heating element based on the real-time temperature of the heating element (S506).

4. The method according to claim 3, wherein the determining the heating duration of the next heating period of the heating element based on the real-time temperature of the heating element comprises:
calculating the heating duration of the next heating period of the heating element based on the real-time temperature of the heating element if the real-time temperature of the heating element is less than the target temperature.

5. The method according to claim 4, wherein the calculating the heating duration of the next heating period of the heating element based on the real-time temperature of the heating element comprises:
determining a heating energy for heating the heating element from the real-time temperature of the heating element to the target temperature, and
determining the heating duration of the next heating period of the heating element based on the heating energy.

6. The method according to claim 5, wherein the determining the heating energy for heating the heating element from the real-time temperature of the heating element to the target temperature comprises:
calculating the heating energy based on a difference between the target temperature and the real-time temperature of the heating element, a specific heat capacity of a material of the heating element, and a mass of the heating element.

7. The method according to claim 5, wherein the determining the heating duration of the next heating period of the heating element based on the heating energy comprises:
obtaining a voltage value and a current value of the heating element in a target detection period (S602), the target detection period being a detection period corresponding to the real-time temperature of the heating element,
determining a power of the heating element based on the voltage value and the current value (S604),
and
determining the heating duration of the next heating period of the heating element based on the power of the heating element and the heating energy (S606).

8. The method according to claim 7, wherein the heating duration of the next heating period of the heating element is a ratio of the heating energy to the power.

9. The method according to any one of claims 1 to 8, wherein a heating duration of the first heating period of the heating control process is a preset heating duration.

10. A heating control device (1200) for an atomization device, comprising an obtaining module (1202) and a state determination module (S1204),
the obtaining module (1202) being configured to obtain a real-time detected temperature of a heating element of the atomization device in each detection period of a heating control process,
and
the state determination module (1204) being configured to determine a heating state of the heating element based on a heating duration of a current heating period and the real-time detected temperature;
wherein the detection periods are shorter than the current heating period, and the heating durations of different heating periods are the same or different.

11. A heating control circuit (110) for an atomization device, comprising a control chip (1104), a heating switch (1102), and a temperature sensor (1106) that are connected to the control chip (1104), the heating switch (1102) being connected to a heating element (1103) of the atomization device;
the temperature sensor (1106) being configured to obtain a real-time detected temperature of the heating element in each detection period of a heating control process, and
the control chip (1104) being configured to determine a heating state of the heating element based on a heating duration of a current heating period and the real-time detected temperature, and control an on-off state of the heating switch (1102) based on the heating state of the heating element (1103) to control the heating state of the heating element (1103).

12. The circuit according to claim 11, further comprising a voltage and current sampling circuit (1105) connected between the control chip (1104) and the heating element (1103);
the voltage and current sampling circuit (1105) being configured to obtain a voltage value and a current value of the heating element (1103) in a target detection period, the target detection period being a detection period corresponding to a real-time temperature of the heating element (1103) that is less than a target temperature after the heating duration of the current heating period ends;
and
the control chip (1104) being configured to determine a power of the heating element (1103) based on the voltage value and the current value, calculate a heating energy for heating the heating element (1103) from the real-time temperature of the heating element to the target temperature based on a difference between the target temperature and the real-time temperature of the heating element(1103), a specific heat capacity of a material of the heating element(1103), and a mass of the heating element(1103), and determine a heating duration of a next heating period of the heating element (1103) based on the power and the heating energy.

13. An atomization device comprising at least one memory and at least one processor, a computer program being stored in the at least one memory, wherein when the computer program is executed by the at least one processor, steps of the method according to any one of claims 1 to 9 are performed.

14. A non-transitory computer readable storage medium, on which a computer program is stored, wherein when the computer program is executed by at least one processor, steps of the method according to any one of claims 1 to 9 are performed.

15. A computer program product comprising a computer program, wherein when the computer program is executed by at least one processor, steps of the method according to any one of claims 1 to 9 are performed.
